**Europäisches Patentamt**

(19) **European Patent Office**

**Office européen des brevets**

(11) Veröffentlichungsnummer: **0 106 110**

**A1**

(12) # EUROPÄISCHE PATENTANMELDUNG

(21) Anmeldenummer: 83108751.5

(22) Anmeldetag: 06.09.83

(51) Int. Cl.³: **C 08 F 222/02**
C 08 F 220/04, C 08 F 4/30
C 11 D 3/37, C 02 F 5/10
(C08F220/04, 222/02)

(30) Priorität: 11.09.82 DE 3233776

(43) Veröffentlichungstag der Anmeldung:
25.04.84 Patentblatt 84/17

(84) Benannte Vertragsstaaten:
AT BE CH DE FR GB IT LI NL SE

(71) Anmelder: BASF Aktiengesellschaft
Carl-Bosch-Strasse 38
D-6700 Ludwigshafen(DE)

(72) Erfinder: Denzinger, Walter
Wormser Landstrasse 65
D-6720 Speyer(DE)

(72) Erfinder: Hartmann, Heinrich, Dr.
Weinheimer Strasse 46
D-6703 Limburgerhof(DE)

(72) Erfinder: Trieselt, Wolfgang, Dr.
Alwin-Mittasch-Platz 1
D-6700 Ludwigshafen(DE)

(72) Erfinder: Hettche, Albert, Dr.
Kleistrasse 12
D-6717 Hessheim(DE)

(72) Erfinder: Schneider, Rolf, Dr.
Feldbergstrasse 21
D-6800 Mannheim 1(DE)

(72) Erfinder: Raubenheimer, Hans-Juergen
Benzstrasse 6
D-6834 Ketsch(DE)

(54) Verfahren zur Herstellung von Copolymerisaten aus monoethylenisch ungesättigten Mono- und Dicarbonsäuren.

㊼ Verfahren zur Herstellung von Copolymerisaten, die Monoethylenisch ungesättigte Mono- und Dicarbonsäuren als Monomereinheiten einpolymerisiert enthalten, bei dem man - jeweils bezogen auf die Summe der Monomeren -
a) 10 bis 60 Gew.-% einer monoethylenisch ungesättigten Dicarbonsäure mit 4 bis 6 C-Atomen, ihres Salzes und/oder gegebenenfalls ihres Anhydrids,
b) 90 bis 40 Gew.-% einer monoethylenisch ungesättigten Monocarbonsäure mit 3 bis 10 C-Atomen und/oder ihres Salzes und
c) 0 bis 20 Gew.-% eines sonstigen carboxylgruppenfreien monoethylenisch ungesättigten mit a) und b) copolmyerisierbaren Monomeren
in Gegenwart von 0,5 bis 5 Gew.-% eines wasserlöslichen radikalbildenden Initiators in wäßrigem Medium copolymerisiert, wobei man die Dicarbonsäure, ihr Salz bzw. ihr Anhydrid im wäßrigen Medium vorlegt und die Monocarbonsäure bzw. ihr Salz mit dem Initiator innerhalb 3 bis 10 Stunden zufügt, bei 60 bis 150°C abreagieren läßt, bei dem man die carboxylgruppenhaltigen Monomeren a) und b) in einer Form einsetzt, in der sie zusammen bei der Polymerisation zu 20 bis 80 % neutralisiert sind, und als Initiatoren eine Kombination aus Wasserstoffperoxid und eines Peroxidisulfats im Gewichtsverhältns 3 : 1 bis 1 : 3 einsetzt. Die genannten Copolymerisate können als Inkrustierungsinhibitoren oder für die scaling inhibition verwendet werden.

BASF Aktiengesellschaft                                    O.Z. 0050/36140

Verfahren zur Herstellung von Copolymerisaten aus monoethylenisch
ungesättigten Mono- und Dicarbonsäuren

Die Erfindung betrifft ein neues Verfahren zur Herstellung von Copolymerisaten monoethylenisch ungesättigter Mono- und Dicarbonsäuren durch radikalische Copolymerisation der Monomeren in wäßrigem Medium, wobei Copolymerisate entstehen, die einen extrem niedrigen Gehalt an restlicher monomerer Dicarbonsäure aufweisen. Die Copolymerisate sind für die Verwendung
als Inkrustierungsinhibitor oder für die scaling inhibition insbesondere
geeignet.

Aus der DE-OS 29 36 984 sind Copolymerisate der Maleinsäure und Acrylsäure bekannt, die als Inkrustierungsinhibitoren in Wasch- und Reinigungsmitteln Verwendung finden - eine spezielle Herstellungsmethode für diese
Polymerisate wird dort jedoch nicht angegeben.

In der DE-OS 22 12 623 ist ein Verfahren beschrieben (siehe Beispiel 3
der Publikation), bei dem man die Copolymerisation von Maleinsäureanhydrid und Acrylsäure in Gegenwart von Benzoylperoxid in Benzol als
Lösungsmittel durchführt - es handelt sich um eine Fällungspolymerisation, bei der das gebildete Polymerisat wegen seiner Unlöslichkeit in
Benzol bei seiner Bildung ausfällt. Nachteilig bei dieser Methode ist der
notwendige Einsatz von Benzol, das anschließend wieder abgetrennt werden
muß. Außerdem entstehen Polymerisate mit zu hohem Molgewicht, was aber
deren Eigenschaften als Inkrustierungsinhibitoren abträglich ist.

Aus der US-PS 3 258 491 ist ein Verfahren zur Herstellung von Maleinsäureanhydrid/Vinylacetat-Copolymeren bekannt, bei dem in Wasser und in Gegenwart von Redoxkatalysatoren polymerisiert wird.

In dieser Literaturstelle wird ausdrücklich darauf hingewiesen, daß die
Methode nur bei genauer Einhaltung des pH-Bereichs zwischen 3 und 5 erfolgversprechend ist. Eine Verbesserung der letztgenannten Methode soll
gemäß der US-PS 2 887 480 darin bestehen, daß man bei der Copolymerisation von Maleinsäure(anhydrid) und Acrylsäure in wäßrigem Medium einem
radikalbildenden Initiator, wie Kaliumperoxidisulfat, in Mengen von -
bezogen auf die Summe der Monomeren - mindestens 17 Gew.-% einsetzt.
Dieser sehr hohe Anteil an Initiator hat - abgesehen von dem hohen Verbrauch an irreversibel zu vernichtenden Chemikalien - den Nachteil, daß
die erhaltenen Copolymerisate wegen des hohen Angebots an Peroxogruppen
chemisch zu sehr verändert werden (Einbau von Carboxylfunktionen u.ä.).
Ze/Kl

Gegenstand unserer älteren Patentanmeldung P 31 38 574.5 ist ein Verfahren zur Herstellung von Copolymerisaten, die monoethylenisch ungesättigte Mono- und Dicarbonsäuren als Monomereinheiten einpolymerisiert enthalten, durch Copolymerisation der Monocarbonsäuren mit den Dicarbonsäuren oder gegebenenfalls deren inneren Anhydriden in wäßrigem Medium in Gegenwart von wasserlöslichen Initiatoren, bei dem man - bezogen auf die Summe der Monomeren -

a)    10 bis 60 Gew.-% einer monoethylenisch ungesättigten Dicarbonsäure mit 4 bis 6 C-Atomen, ihres Salzes oder gegebenenfalls deren Anhydrid,

b)    90 bis 40 Gew.-% einer monoethylenisch ungesättigten Monocarbonsäure mit 3 bis 10 C-Atomen oder ihres Salzes und

c)    0 bis 10 Gew.-% eines sonstigen carboxylgruppenfreien monoethylenisch ungesättigten mit a) und b) copolymerisierbaren Monomeren

in Gegenwart von 0,5 bis 5 Gew.-% - bezogen auf die Monomeren - eines wasserlöslichen radikalbildenden Initiators in wäßrigem Medium in der Weise copolymerisiert, daß man die Dicarbonsäure, ihr Salz bzw. ihr Anhydrid im wäßrigen Medium vorlegt und die Monocarbonsäure bzw. ihr Salz mit dem Initiator innerhalb 3 bis 10 Std. zufügt und bei 60 bis 150°C abreagieren läßt und gegebenenfalls die Anhydridgruppen verseift.

Mit diesem Verfahren ist man dem Ziel, in möglichst nicht aufwendiger Weise zu Produkten zu gelangen, die als optimale Inkrustierungsinhibitoren wirksam sind, schon sehr nahe gekommen. Zusammen mit den vorgenannten Verfahren hat es aber noch den Nachteil, daß die damit erhaltenen Copolymerisate einen noch zu hohen Gehalt an monomerer Dicarbonsäure aufweisen, der neben einem Wirkungsabfall der Copolymerisate auch physiologisch nicht ganz unbedenklich ist. Da eine nachträgliche Abtrennung dieser Restdicarbonsäuren aus den fertigen Copolymerisaten sehr schwierig ist, bestand das Ziel der vorliegenden Erfindung darin, das vorgenannte ältere Verfahren derart zu optimieren, daß der Restgehalt an unpolymerisierter Dicarbonsäure höchstens noch 1,5 Gew.-%, möglichst aber noch weniger, beträgt. Bezüglich der Monocarbonsäuren stellt sich dieses Problem nicht, da diese - vor allem Acryl- oder Methacrylsäure - zu nahezu 100 % durchpolymerisieren.

Eine Verbesserung konnte durch die Maßnahmen wie sie in der älteren Patentanmeldung P 31 47 489 beschrieben sind, erreicht werden. Sie bestehen darin, daß die carboxylgruppenhaltigen Monomeren a) und b) in einer Form zum Einsatz gelangen, in der sie während der Polymerisationsreaktion zusammen zu 20 bis 80 % neutralisiert sind. Bei dieser Maßnahme sind aber auch größere Initiatormengen und höhere Polymerisationstemperaturen, besonders bei Copolymeren mit höherem Dicarbonsäureanhydridgehalt erforderlich, um zu geringen Restgehalten an monomere Dicarbonsäure zu gelangen. Diese Maßnahmen hatten zur Folge, daß die K-Werte, besonders bei Copolymeren mit höherem Dicarbonsäuregehalt, auf etwa 30 und darunter abfielen. Für viele Einsatzzwecke sind jedoch Produkte mit K-Werten, gemessen an den vollneutralisierten Natriumsalzen (2 %ig in Wasser) von 40 und höher günstiger.

Dieses Ziel, höhere K-Werte und niedrigere Restgehalte an Dicarbonsäure bei hohen Anteilen an einpolymerisierter Dicarbonsäure zu erreichen, wurde erfindungsgemäß erreicht, indem als radikalbildender Initiator eine Kombination von Wasserstoffperoxid und eines Peroxidisulfats im Gewichtsverhältnis 3 : 1 bis 1 : 3 eingesetzt wird.

Ausgangscomonomeren a) des erfindungsgemäßen Verfahrens sind monoethylenisch ungesättigte Dicarbonsäuren, ihre Salze und/oder, falls es die räumliche Stellung der Carboxylgruppen zuläßt (cis-Position), deren Anhydride. Geeignete Dicarbonsäuren, die 4 bis 6 C-Atome enthalten, sind beispielsweise Maleinsäure, Itaconsäure, Mesaconsäure, Fumarsäure, Methylenmalonsäure, Citraconsäure, deren Salze oder gegebenenfalls Anhydride.

Ausgangsmonomere b) sind monoethylenisch ungesättigte Monocarbonsäuren und/oder ihre Salze. Sie besitzen 3 bis 10 C-Atome im Molekül, und es seien hier vor allem Acrylsäure oder Methacrylsäure genannt, jedoch sind aber auch z.B. Vinylessigsäure oder $C_2$- bis $C_4$-Alkylhalbester der obengenannten Dicarbonsäuren, vor allem der Maleinsäure einsetzbar. Auch Mischungen aus den Gruppen a) und b) sind verwendbar.

Unter "Salzen" der unter a) und b) genannten Carbonsäuren sind Alkalimetallsalze, vorzugsweise Natrium- oder Kaliumsalze, Ammoniumsalze und organische Aminsalze, wie die der Tri-$C_1$- bis $C_4$-Alkylamine, des Hydroxyethylamins, der Mono, Di- oder Tri-$C_1$- bis $C_4$-alkanolamine oder deren Mischungen zu verstehen. Im folgenden soll der Einfachheit halber nach wie vor von "Salzen" die Rede sein.

Beim Einsatz der Monomeren a) und b) ist darauf zu achten, daß sie zusammen – d. h. die Summe von a) und b) – zu 20 bis 80 %, vorzugsweise 30 bis 70 %, neutralisiert sind. Dies kann dadurch erfolgen, daß man die Dicarbonsäuren oder einen Teil davon in Form ihrer Salze, und die Monocarbonsäuren in freier Form einsetzt. Man kann aber auch umgekehrt verfahren und die Dicarbonsäuren in freier Form oder als – soweit möglich – Anhydride und die Monocarbonsäuren in Form ihrer Salze verwenden. In jedem Fall wird man dafür Sorge tragen, daß das Verhältnis freier Säuren zu den Salzen einem Gesamtneutralisationsgrad der obengenannten Definition entspricht.

Unter den bevorzugt einzusetzenden Alkalimetallsalzen wählt man zweckmäßigerweise die am leichtesten erhältlichen, nämlich die Natrium- oder Kaliumsalze, vorzugsweise die Natriumsalze.

Ausgangsmonomere c), die nicht unbedingt mit einpolymerisiert werden müssen, sind carboxylgruppenfreie mit den Monomeren a) und b) copolymerisierbare, vorzugsweise wasserlösliche Monomere. Hier seien z.B. Acrylamid, Methacrylamid, 2-Acrylamido-2-methylpropansulfonsäure, Vinylsulfonsäure, Allylsulfonsäure, Vinylphosphonsäure, Allylphosphonsäure, Vinylacetat, Hydroxyethyl- oder -propylacrylat, Diethylaminoethyl(meth)acrylat, Vinylglycol, Allylalkohol oder (Meth)acrylsäuremethylester genannt. Die genannten Sulfon- und Phosphonsäuren können ebenfalls unter Berücksichtigung des definitionsgemäßen Neutralisationsgrades - in Form ihrer Alkalimetall- und/oder Ammonium- und/oder Aminsalze zum Einsatz gelangen.

Die Monomeren a) sind im Ansatz zu 60 bis 10, vorzugsweise 45 bis 20 Gew.-%, die Monomeren b) zu 40 bis 90, vorzugsweise 55 bis 80 Gew.-% anwesend. Die Monomeren c) können bis zu 20 Gew.-% eingesetzt werden.

Erfindungsgemäß sind die wasserlöslichen radikalbildenden Initiatoren Kombinationen aus Wasserstoffperoxid und Peroxidisulfaten. Als Peroxidsulfate kommen Alkaliperoxiddisulfate wie beispielsweise Ltihium-, Natrium- und Kaliumperoxidisulfat sowie Ammoniumperoxidisulfat in Betracht. Das Verhältnis Wasserstoffperoxid zu Peroxidisulfat ist erfindungsgemäß 3 : 1 bis 1 : 3 (Gewichtsteile), wobei die Kombination Wasserstoffperoxid und Natriumperoxidisulfat und ein Verhältnis von etwa 1 : 1 bevorzugt ist.

Die Initiatorkombinationen sind zweckmäßigerweise zu 0,5 bis 5 Gew.-% - bezogen auf die Summe der Monomeren - im Ansatz zugegen. Die Polymerisation findet in wäßrigem Medium statt. Hierbei sollte die Konzentration zweckmäßigerweise so gewählt werden, daß die wäßrige Lösung 20 bis 70 Gew.-%, vorzugsweise 40 bis 60 Gew.-% an Gesamtmonomeren enthält.

Außerdem können die bei radikalischen Polymerisationen in wäßrigem Medium üblichen Regler, wie Thioglycolsäure oder $C_1$-$C_4$-Aldehyde, oder Kettenverlängerer wie Methylenbisacrylamid oder Divinylglycol zum Einsatz gelangen und zwar - bezogen auf die Summe der Monomeren - zu 0,1 bis 5 Gew.-%.

Bei der Polymerisation geht man üblicherweise vor, daß man zunächst eine wäßrige Lösung der Dicarbonsäure, ihres Salzes und/oder Anhydrids vorlegt und anschließend innerhalb 3 bis 10 Stunden, vorzugsweise 5 bis 8 Stunden die Monocarbonsäure und/oder ihr Salz und den Initiator, zweckmäßigerweise ebenfalls in wäßriger Lösung, zufügt. Manchmal ist es von Vorteil, einen geringen Teil der Komponente b) zusammen mit einem geringen Anteil an Initiator sofort der vorgelegten Komponente a) zuzusetzen. Die Reaktionstemperatur kann in weiten Grenzen schwanken, zweckmäßigerweise wählt man Temperaturen zwischen 60 und 150°C, vorzugsweise 90 bis 130°C. Als Reaktionsgefäß wählt man, falls oberhalb der Siedetemperatur des Wassers gearbeitet wird, Druckgefäße, wie Autoklaven.

Nach beendeter Polymerisation stellt man je nach Verwendungszweck schwächer oder stärker alkalisch, wobei die Anhydridgruppen - sofern sich Anhydride im Ansatz befanden - verseift werden.

Die erhaltene wäßrige Polymerisatlösung kann sofort verwendet werden. Die Polymerisate können aber auch durch Eindampfen der Lösung in getrockneter Form isoliert und z.B. in pulverförmige Waschmittel eingearbeitet werden. Schließlich kann auch die wäßrige Lösung direkt mit andere Waschmittelbestandteile enthaltenden wäßrigen Lösungen vereinigt und den üblichen Sprühprozessen unterworfen werden.

Die Copolymerisate weisen K-Werte zwischen 8 und 100, meistens aber zwischen 30 und 60 auf. Sie entsprechen sämtlichen Erfordernissen, wie sie für gute Inkrustierungsinhibitoren gelten. Die Copolymerisate weisen Gehalte an nicht umgesetzten Dicarbonsäuren von weniger als 1,5 % auf, was an sich schon deshalb überraschen muß, weil - besonders wenn man von Alkalimetallsalzen der Dicarbonsäuren, wie Maleinsäure, ausgeht - man eher das Gegenteil erwarten konnte, nämlich eine verschlechterte Polymerisation. Bekanntlich polymerisiert Maleinsäureanhydrid besser als die freie Maleinsäure oder ihr Alkalimetallsalz. Die nun folgenden Beispiele erläutern die Erfindung. Die K-Werte wurden von den vollneutralisierten Salzen nach H. Fikentscher, Cellulosechemie 13, S. 60 (1932) in 2 %iger Lösung in Wasser bei 25°C bestimmt. Die monomere Maleinsäure wurde auf polarographischem Wege bestimmt (siehe "Polarographische Arbeitsmethoden" von Dr. Mark von Stackelberg erschienen 1950 im Verlag Walter De Gruyter & Co, Berlin W 35).

<u>Beispiele</u>

<u>Allgemeine Herstellungsvorschrift</u>

In einem mit Rührer versehenen Edelstahlreaktor wurden 195,9 Teile Maleinsäureanhydrid, 336 Teile dest. Wasser und 143,9 Teile Natriumhydroxid vorgelegt. Der Reaktor wird 3-mal mit Stickstoff (5 bar) abgepreßt und dann der Inhalt auf 100°C erhitzt. Dann werden innerhalb 5 Stunden eine Mischung aus 299 Teilen dest. Wasser und 231,85 Teilen Acrylsäure und innerhalb 6 Stunden der in nachfolgender Tabelle angegebenen Menge Initiator gelöst, in 180 Teilen dest. Wasser, bei 100°C zudosiert. Anschließend wird noch 2 Stunden bei 100°C nacherhitzt und dann mit 190 Teilen 50 %iger Natronlauge neutralisiert.

Tabelle

| Beispiel Nr. | Initiatorkombination H₂O₂ (30 %ig)* (Teile) | Peroxidisulfat (Teile) | | K-Wert | Rest-MS-Gehalt [%] berechnet auf Feststoff |
|---|---|---|---|---|---|
| 1 | 61,8 | – | | 37 | 0,95 |
| 2 | – | 18,6 | Natriumperoxidisulfat | 40 | 0,54 |
| 3 | 30,9 | 9,3 | Natriumperoxidisulfat | 38 | 0,01 |
| 4 | 30,9 | – | | 44 | 3,6 |
| 5 | – | 9,3 | Natriumperoxidisulfat | 47 | 3,8 |
| 6 | 7,72 | 6,98 | Natriumperoxidisulfat | 45 | 1,1 |
| 7 | 15,45 | 4,65 | Natriumperoxidisulfat | 44 | 1,0 |
| 8 | 23,18 | 2,32 | Natriumperoxidisulfat | 45 | 1,3 |
| 9 | 23,18 | 6,98 | Kaliumperoxidisulfat | 41 | 0,22 |
| 10 | 23,18 | 6,98 | Ammoniumpersulfat | 40 | 0,27 |

Beispiel 1, 2, 4 und 5 sind nicht erfindungsgemäß und dienen dem Vergleich.

* Die angegebenen Teile beziehen sich auf die Lösung.

## Patentansprüche

1. Verfahren zur Herstellung von Copolymerisaten, die monoethylenisch ungesättigte Mono- und Dicarbonsäuren als Monomereinheiten einpolymerisiert enthalten, bei dem man - jeweils bezogen auf die Summe der Monomeren -

a) 10 bis 60 Gew.-% einer monoethylenisch ungesättigten Dicarbonsäure mit 4 bis 6 C-Atomen, ihres Salzes und/oder gegebenenfalls ihres Anhydrids,

b) 90 bis 40 Gew.-% einer monoethylenisch ungesättigten Monocarbonsäure mit 3 bis 10 C-Atomen und/oder ihres Salzes und

c) 0 bis 20 Gew.-% eines sonstigen carboxylgruppenfreien monoethylenisch ungesättigten mit a) und b) copolymerisierbaren Monomeren

in Gegenwart von 0,5 bis 5 Gew.-% eines wasserlöslichen radikalbildenden Initiators in wäßrigem Medium in der Weise polymerisiert, daß man die Dicarbonsäure, ihr Salz bzw. ihr Anhydrid im wäßrigen Medium vorlegt und die Monocarbonsäure bzw. ihr Salz mit dem Initiator innerhalb 3 bis 10 Stunden zufügt, bei 60 bis 150°C abreagieren läßt und wobei man die Monomeren a) und b) in einer Form einsetzt, daß sie während der Polymerisationsreaktion zu 20 bis 80 % neutralisiert sind, <u>dadurch gekennzeichnet</u>, daß man als Initiator eine Kombination aus Wasserstoffperoxid und eines Peroxidisulfats im Gewichtsverhältnis 3 : 1 bis 1 : 3 einsetzt.

2. Verfahren nach Anspruch 1, <u>dadurch gekennzeichnet</u>, daß man als Monocarbonsäure(Meth)acrylsäure und als Dicarbonsäure Maleinsäure und/oder die entsprechenden Salze einsetzt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | GB-A-1 026 145 (MONSANTO) <br> * Anspruch 1; Seite 2, Zeilen 105-119 * <br><br> --- | 1,2 | C 08 F 222/02 <br> C 08 F 220/04 <br> C 08 F 4/30 <br> C 11 D 3/37 <br> C 02 F 5/10 // <br> (C 08 F 222/02 |
| Y | US-A-3 635 915 (D.J. GALE) <br> * Anspruch 1 * <br><br> --- | 1,2 | C 08 F 220/04 ) <br> (C 08 F 220/04 <br> C 08 F 222/02 ) |
| P | EP-A-0 075 820 (BASF) <br><br> ----- | | |

**RECHERCHIERTE SACHGEBIETE (Int. Cl. ³)**

C 08 F

Der vorliegende Recherchenbericht wurde für alle Patentansprüche erstellt.

| Recherchenort | Abschlußdatum der Recherche | Prüfer |
|---|---|---|
| DEN HAAG | 30-01-1984 | CAUWENBERG C.L.M. |